# EUROPÄISCHE PATENTSCHRIFT

(11) **EP 2 095 901 B1**
(45) Veröffentlichungstag und Bekanntmachung des Hinweises auf die Patenterteilung: **10.04.2019**
(21) Anmeldenummer: 09153435.4
(22) Anmeldetag: 23.02.2009
(51) Int. Cl.: B23H 3/00, B23H 9/10

(54) **Verfahren zur Herstellung und Anwendung einer Schutzschicht**
Method for manufacturing and applying a protective coating
Procédé de fabrication et d'application d'une couche de protection

(30) Priorität: 27.02.2008 DE 102008011427
(43) Veröffentlichungstag der Anmeldung: 02.09.2009
(73) Patentinhaber: MTU Aero Engines AG, 80995 München (DE)
(72) Erfinder: Platz, Albin, 86510 Ried-Baindlkirch (DE); Lopez Lavernia, Natividad, 80993 München (DE)

(56) Entgegenhaltungen:
- EP-A2- 0 079 754
- GB-A- 2 227 966

## Beschreibung

Die vorliegende Erfindung betrifft ein Verfahren zur Bearbeitung und Reparatur eines metallischen Werkstücks mit mindestens einer bereits endbearbeiteten oder nahezu endbearbeiteten Werkstückteilfläche und mindestens einer mittels eines elektrochemischen Bearbeitungsverfahrens weiter zu bearbeitenden, an die mindestens eine bereits endbearbeitete oder nahezu endbearbeitete Werkstückteilfläche angrenzenden Bearbeitungsfläche. Die Erfindung betrifft weiterhin Verwendungen des erfindungsgemäßen Verfahrens.

Verfahren zur elektrochemischen Bearbeitung eines Werkstücks mit mindestens einer Elektrode sind bekannt. So stellt zum Beispiel das so genannte elektrochemische Senken ein Verfahren zum exakten und sehr präzisen Bearbeiten von Oberflächen dar. Beim elektrochemischen Senken wird in der Regel mit mindestens einer Elektrode die Oberfläche des Werkstückes bearbeitet, wobei durch elektrochemische Reaktion des Werkstückes mit dem sich zwischen dem Werkstück und der Elektrode befindlichen Elektrolyt ein Abtragen von Material am Werkstück erfolgt. Nachteilig an den bekannten elektrochemischen Senkverfahren ist jedoch, dass zum Beispiel beim Senken von Bauteilen einer Gasturbine oder eines Nieder- oder Hochdruckverdichters bereits fertig gesenkte und damit die geforderte Endkontur aufweisende Werkstückteilflächen durch den elektrochemischen Prozess angegriffen und zum Teil abgetragen werden. Der Abtrag führt zu einer unerwünschten Veränderung der Geometrie, so dass in der Regel Zeichnungstoleranzen überschritten werden. Derartige Ungenauigkeiten sind insbesondere im Triebwerksbau unerwünscht. Insbesondere verhindern sie, dass eine noch weitergehende Automatisierung bei der Fertigung der genannten Bauteile erzielt werden kann.

Aus den Dokumenten GB 2 227 966 A und EP 0 079 754 A2 ist bekannt, auf Werkstückoberflächen, welche an zu bearbeitende Flächen angrenzen, elektrisch leitende Schichten zum Schutz vor einem unerwünschten elektrochemischen Angriff, insbesonders durch Streuströme aufzubringen. Die Schutzschichten werden zum Teil durch die elektrochemischen Bearbeitung angegriffen und nach der Bearbeitung gezielt z.B. durch Waschen mit heißem Wasser entfernt.

Es ist daher Aufgabe der vorliegenden Erfindung ein Verfahren zur Bearbeitung und Reparatur eines metallischen Werkstücks mit mindestens einer bereits endbearbeiteten oder nahezu endbearbeiteten Werkstückteilfläche und mindestens einer mittels eines elektrochemischen Bearbeitungsverfahrens weiter zu bearbeitenden, an die mindestens eine bereits endbearbeitete oder nahezu endbearbeitete Werkstückteilfläche angrenzenden Bearbeitungsfläche bereit zu stellen, welches einen sicheren Schutz der bereits endbearbeiteten oder nahezu endbearbeiteten Werkstückteilfläche gegen einen unerwünschten elektrochemischen Abtrag auf dem zu bearbeitenden Werkstück gewährleistet.

Die der Erfindung zu Grunde liegend Aufgabe wird durch ein Verfahren mit den im Anspruch 1 dargelegten Merkmalengelöst.

Vorteilhafte Ausgestaltungen sind in den jeweiligen Unteransprüchen beschrieben.

Ein erfindungsgemäßes Verfahren zur Bearbeitung und Reparatur eines metallischen Werkstücks mit mindestens einer bereits endbearbeiteten oder nahezu endbearbeiteten Werkstückteilfläche und mindestens einer mittels eines elektrochemischen Bearbeitungsverfahrens weiter zu bearbeitenden, an die mindestens eine bereits endbearbeitete oder nahe endbearbeitete Werkstückteilfläche angrenzende Bearbeitungsfläche umfasst folgende Schritte:
a) Aufbringen einer elektrisch leitfähigen Schicht auf zumindest einen an die Bearbeitungsfläche angrenzenden Bereich der mindestens einen bereits endbearbeiteten oder nahezu endbearbeiteten Werkstückteilfläche, wobei die Schicht ein Metall oder einer Metall-Legierung oder anderes elektrisch leitfähiges Material enthält, welche ein ähnliches oder gleiches oder gezielt unterschiedliches elektrochemisches Abtragverhalten wie das metallische Werkstück aufweist; und
b) elektrochemisches Bearbeiten der Bearbeitungsfläche und der Schicht, wobei die Schicht vollständig oder nahezu vollständig abgetragen wird.

Durch das erfindungsgemäße Aufbringen einer Beschichtung, die ein, dem zu bearbeitenden Werkstoff bzw. Werkstück ähnliches oder gleiches oder gezielt unterschiedliches elektrochemisches Abtragverhalten aufweist ist die Bearbeitung der noch zu bearbeitenden Bearbeitungsfläche des Werkstücks ohne Beeinflussung angrenzender, bereits bearbeiteter und zu schützender Bereiche möglich. Zudem ergibt sich durch das vollständige oder nahezu vollständige Abtragen der Schicht während des Verfahrensschritts b) ein nahtloser Übergang zwischen der zu bearbeitenden Bearbeitungsfläche und der oder den angrenzenden, zu schützenden Bereichen der bereits bearbeiteten Werkstückteilfläche bzw. Werkstückteilflächen. Bei den elektrochemischen Bearbeitungsverfahren kann es sich insbesondere um gepulste oder nicht gepulste elektrochemische Senkverfahren oder auch elektrochemische Bohrverfahren handeln.

Bei weiteren vorteilhaften Ausgestaltungen des erfindungsgemäßen Verfahrens besteht die Schicht vorzugsweise aus einer Nickel-, Kobalt-, Eisen- oder Titanbasislegierung. Aber auch andere Metalle und Metall-Legierungen, die ein ähnliches oder gleiches elektrochemisches Abtragverhalten wie das zu bearbeitende metallische Werkstück aufweisen sind verwendbar. Das Werkstück kann zum Beispiel aus einer Nickel-, Kobalt-, Eisen- oder Titanbasislegierung bestehen. Des Weiteren kann die Schicht eine Dicke zwischen 1 µm und 2 mm aufweisen. Die Dicke der Schicht hängt dabei insbesondere von dem Umfang und der Dauer des gemäß Verfahrensschritt b) erfolgenden elektrochemischen Bearbeitens der Bearbeitungsfläche ab und wird so gewählt, dass die bereits endbearbeiteten oder nahezu endbearbeiteten Werkstückflächen keinen weiteren elektrochemischen Abtrag erfahren.

In weiteren vorteilhaften Ausgestaltungen des erfindungsgemäßen Verfahrens erfolgt das Aufbringen der Schicht gemäß Verfahrensschritt a) durch Lackieren oder durch ein thermisches Spritzverfahren. Bei dem thermischen Spritzverfahren kann es sich dabei um ein Lichtbogenspritz-, ein Flammspritz-, ein atmosphärisches Plasmaspritz- oder ein Hochgeschwindigkeitsflammspritzverfahren und VPS und Schutzgas PS handeln. Es ist aber auch möglich, dass das Aufbringen der metallischen Schicht gemäß Verfahrensschritt a) durch ein Kaltgasspritzverfahren oder durch das Aufbringen eines metallischen Schlickers mit einer anschließenden Wärmebehandlung erfolgt. Auch ein galvanisches Aufbringen der Schicht ist möglich.

Verwendung findet das erfindungsgemäße Verfahren bei der Herstellung und Reparatur von Triebwerksbauteilen aus Nickel-, Kobalt-, Eisen- oder Titanbasislegierungen, insbesondere die Herstellung und Reparatur von Schaufelprofilen.

Eine weitere Verwendung des erfindungsgemäßen Verfahrens ist die Herstellung und Reparatur von Triebwerksbauteilen, insbesondere die Herstellung und Reparatur von integralen Rotorkonstruktionen. Dies betrifft insbesondere eine Rotorschaufel und eine Rotorscheibe bestehend aus einem Stück (Blisk) und integral mit einem tragenden Ring hergestellte Rotorschaufeln (Bling).

Nachfolgend werden bevorzugte Ausführungsformen der Erfindung unter Bezug auf die Zeichnungen beschrieben, in der
- Fig. 1: schematisch das erfindungsgemäße Verfahren bei einer ersten Ausführungsform;
- Fig. 2: schematisch das erfindungsgemäße Verfahren bei einer zweiten Ausführungsform; und
- Fig. 3: schematisch das erfindungsgemäße Verfahren bei einer dritten Ausführungsform veranschaulicht.

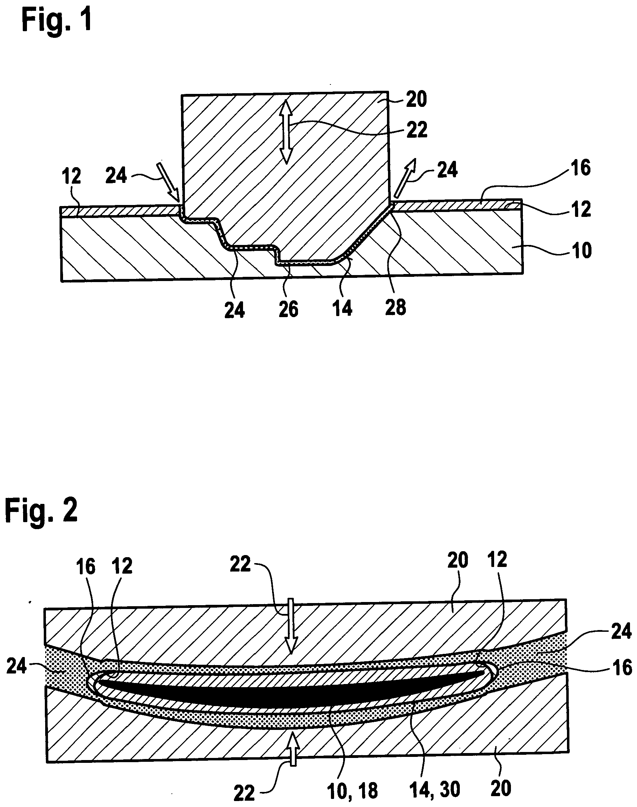

Die Fig. 1 zeigt einen Anwendungsbereich des Verfahrens bei der elektrochemischen Bearbeitung eines Werkstücks 10, bei dem scharfkantige Grenzen zwischen einer bereits endbearbeiteten Werkstückfläche 12 und einer durch das elektrochemische Abtragverfahren weiterzubearbeitenden Bearbeitungsfläche 14 entstehen sollen. Dabei soll von dem Werkstück 10 im Bereich der Bearbeitungsfläche 14 durch ein so genanntes elektrochemisches Senken Material abgetragen werden. Hierfür wird das Werkstück 10 als Anode geschaltet. Eine Elektrode 20 wird als Kathode geschaltet und entsprechend dem Pfeil 22 in Richtung auf das Werkstück 10 bzw. die Bearbeitungsfläche 14 zubewegt. Die Bewegung erfolgt dabei gepulst, insgesamt ergibt sich jedoch eine Bewegungsrichtung in Richtung der Bearbeitungsfläche 14. Des Weiteren erfolgt die Bewegung der Elektrode 20 derart, dass sich die Bearbeitungsfläche 14 und die Elektrode 20 nicht berühren, so dass es zu keinem Kurzschluss kommen kann. Vielmehr wird zwischen der Bearbeitungsfläche 14 und der Elektrode 20 ein Spalt 26 bereitgestellt, wie er in Fig. 1 angedeutet ist. Vor der Zuführung eines Elektrolyten 24 wurde auf die an die Bearbeitungsfläche 14 angrenzenden Bereiche des Werkstücks 10, nämlich die bereits endbearbeiteten oder nahezu endbearbeiteten Werkstückteilflächen 12 eine Schicht 16 vorzugsweise aus einem Metall oder einer Metall-Legierung aufgetragen, wobei die Schicht 16 ein ähnliches oder gleiches elektrochemisches Abtragverhalten wie das metallische Werkstück 10 bzw. die Bearbeitungsfläche 14 aufweist. Mit der Zufuhr des Elektrolyten 24 startet der elektrochemische Bearbeitungsprozess im Spalt 26 bzw. zwischen der Elektrode 20 und der Bearbeitungsfläche 14. Des Weiteren erfolgt ein vollständiger oder nahezu vollständiger Abtrag der Schicht 16, so dass am Ende der Bearbeitung ein scharfkantiger Grenzbereich 28 zwischen der Bearbeitungsfläche 14 und der Werkstückteilfläche 12 entstanden ist. Die Dicke wie auch die Zusammensetzung der metallischen Schicht 16 ist dabei derart gewählt, dass es zu keinem weiteren signifikanten Abtrag der Werkstückteilfläche 12 durch das elektrochemische Bearbeiten der Bearbeitungsfläche 14 kommt.

Fig. 2 veranschaulicht schematisch das Verfahren in einem zweiten Anwendungsbereich bzw. einer zweiten Ausführungsform. Dabei handelt es sich um die elektrochemische Bearbeitung mittels ECM oder PECM eines Werkstücks 10, wobei das Werkstück 10 in dem vorliegenden Ausführungsbeispiel eine Schaufel 18 eines Rotors einer Gasturbine ist. Dabei ist die Schaufel 18 in der zu erreichenden Endkontur dargestellt. Man erkennt, dass die Schaufel 18 noch eine Vorkontur 30 aufweist, die durch die genannten elektrochemischen Bearbeitungsverfahren abgetragen werden soll. Die Schaufelvorkontur 30 entspricht dabei der Bearbeitungsfläche 14 und weist ein ungleichmäßiges Aufmaß auf. Insbesondere an den Schaufelenden ist das Aufmaß sehr gering, so dass in diesen Bereichen kein weiterer Abtrag erfolgen darf. Diese Bereiche entsprechen dabei den bereits endbearbeiteten oder nahezu endbearbeiteten Werkstückteilflächen 12. Auf diese Werkstückteilflächen 12 wird wiederum eine Schicht 16 aufgetragen. Des Weiteren erkennt man, dass in dem Ausführungsbeispiel gemäß Fig. 2 zwei Elektroden 20 als Kathode und das Werkstück 10 bzw. die Schaufel 18 als Anode geschaltet werden. Die beiden Elektroden 20 werden in Richtung der Pfeile 22 beidseitig auf das zu bearbeitende Werkstück 10 zubewegt. In dem Spalt zwischen den Elektroden 20 und dem Werkstück 10, 18 bzw. den zu bearbeitenden Bearbeitungsflächen 14, 30 wird der Elektrolyt 24 zur elektrochemischen Bearbeitung hindurchgeleitet. Die Enden der Schaufel 18 bzw. die Werkstückteilflächen 12 werden durch einen weiteren elektrochemischen Abtrag durch die Metallschichten 16 geschützt.

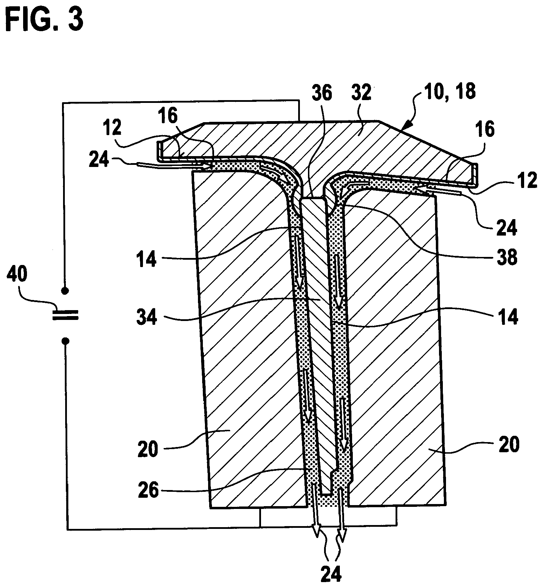

Fig. 3 zeigt eine dritte Anwendungsmöglichkeit des Verfahrens zur Bearbeitung und/oder Reparatur eines metallischen Werkstücks 10. Dabei handelt es sich um die Nachbearbeitung eines durch Fügen auf einen Schaufelträger 32 aufgebrachten Schaufelblatts 34 einer Schaufel 18. Man erkennt, dass sich im Bereich einer Fügestelle 36 eine Wulst 38 ausgebildet hat, die zur Erlangung einer Endkontur der Schaufel 18 bzw. des Werkstücks 10 entfernt werden muss. Der Abtrag der Wulst 38 erfolgt dabei durch ein elektrochemisches Bearbeitungsverfahren, insbesondere einer ECM-Bearbeitung. Zur elektrochemischen Bearbeitung werden zwei Elektroden 20 als Kathoden und das Bauteil 10 bzw. die Schaufel 18 als Anode geschaltet und entsprechend mit einer Spannungsquelle 40 verbunden. Zwischen den Elektroden 20 und der Schaufel 18 ergibt sich wiederum ein Spalt 26 durch den ein Elektrolyt 24 hindurchgeleitet wird. Des Weiteren erkennt man, dass die der Schaufel 18 zugewandten Oberflächen der Elektroden 20 eine Kontur aufweisen, die der Endkontur der zu bearbeitenden Schaufel 18 entspricht. Vor dem elektrochemischen Bearbeiten der Schaufel 18 sind wiederum bereits endbearbeitete Werkstückteilflächen 12 mit der Schicht 16 überzogen worden. In dem dargestellten Ausführungsbeispiel handelt es sich dabei um die bereits bearbeiteten Oberflächen des Schaufelträgers 32. Beim anschließenden elektrochemischen Bearbeiten des Werkstücks 10 bzw. der Schaufel 18 erfolgt ein vollständiger Abtrag der Schicht 16 sowie der Wulst 38. Zudem werden noch zu bearbeitende Bearbeitungsflächen 14 des Schaufelblatts ebenfalls auf Endkontur gebracht. Durch das Aufbringen der metallischen Schicht 16 kann die gesamte Fläche der Schaufel 18 bearbeitet werden und es entsteht eine nahtlose Fertigkontur der Schaufel 18. Die metallische Schicht 16 kann in den dargestellten Ausführungsbeispielen aus einer Nickel-, Kobalt-, Eisen- oder Titanbasislegierung bestehen. Entsprechendes gilt für den Werkstoff des Werkstücks 10 bzw. der Schaufel 18.

Des Weiteren wird deutlich, dass das beschriebene Verfahren nicht nur für die Herstellung von Triebwerksbauteilen sondern auch zu deren Reparatur verwendet werden kann, da hier nicht zu bearbeitende, angrenzende Werkstückteilflächen zuverlässig vor unerwünschtem elektrochemischem Abtrag geschützt werden.

## Patentansprüche

1. Verfahren zur Bearbeitung und/oder Reparatur eines metallischen Werkstücks (10) mit mindestens einer bereits endbearbeiteten oder nahezu endbearbeiteten Werkstückteilfläche (12) und mindestens einer mittels eines elektrochemischen Bearbeitungsverfahrens weiter zu bearbeitenden, an die mindestens eine bereits endbearbeitete oder nahezu endbearbeitete Werkstückteilfläche (12) angrenzenden Bearbeitungsfläche (14), wobeidas Verfahren folgende Schritte umfasst:
a) Aufbringen einer metallischen oder elektrisch leitfähigen Schicht (16) auf zumindest einen an die Bearbeitungsfläche (14) angrenzenden Bereich der mindestens einen bereits endbearbeiteten oder nahezu endbearbeiteten Werkstückteilfläche (12), wobei die Schicht (16) ein Metall oder eine Metall-Legierung oder anderes elektrisch leitfähiges Material enthält, welche ein ähnliches oder gleiches elektrochemisches Abtragverhalten oder gezielt unterschiedliches Abtragverhalten wie das metallische Werkstück (10) aufweist; und
b) elektrochemisches oder präzises elektrochemisches Bearbeiten der Bearbeitungsfläche (14) und der Schicht (16), **dadurch gekennzeichnet, dass** die Schicht (16) vollständig oder nahezu vollständig abgetragen wird.

2. Verfahren nach Anspruch 1, **dadurch gekennzeichnet, dass** das elektrochemische Bearbeitungsverfahren ein gepulstes oder nicht gepulstes elektrochemisches Senkverfahren ist.

3. Verfahren nach Anspruch 1, **dadurch gekennzeichnet, dass** das elektrochemische Bearbeitungsverfahren ein elektrochemisches Bohrverfahren ist.

4. Verfahren nach Anspruch einem der vorhergehenden Ansprüche, **dadurch gekennzeichnet, dass** die Schicht (16) aus einer Nickel-, Kobalt-, Eisen- oder Titanbasislegierung besteht.

5. Verfahren nach einem der vorhergehenden Ansprüche, **dadurch gekennzeichnet, dass** die das Werkstück (10) aus einer Nickel-, Kobalt-, Eisen- oder Titanbasislegierung besteht.

6. Verfahren nach einem der vorhergehenden Ansprüche, **dadurch gekennzeichnet, dass** die Schicht (16) eine Dicke zwischen 1 µm und 2 mm aufweist.

7. Verfahren nach einem der vorhergehenden Ansprüche, **dadurch gekennzeichnet, dass** das Aufbringen der Schicht (16) gemäß Verfahrensschritt a) durch Lackieren erfolgt.

8. Verfahren nach einem der Ansprüche 1 bis 6, **dadurch gekennzeichnet, dass** das Aufbringen der Schicht (16) gemäß Verfahrensschritt a) durch ein thermisches Spritzverfahren erfolgt.

9. Verfahren nach Anspruch 8, **dadurch gekennzeichnet, dass** das thermische Spritzverfahren ein Lichtbogenspritz-, ein Flammspritz-, ein atmosphärisches Plasmaspritz- oder ein Hochgeschwindigkeitsflammspritzverfahren oder ein Plasmaspritzverfahren im Schutzgas/Vakuum ist.

10. Verfahren nach einem der Ansprüche 1 bis 6, **dadurch gekennzeichnet, dass** das Aufbringen der Schicht (16) gemäß Verfahrensschritt a) durch ein Kaltgasspritzverfahren erfolgt.

11. Verfahren nach einem der Ansprüche 1 bis 6, **dadurch gekennzeichnet, dass** das Aufbringen der Schicht (16) gemäß Verfahrensschritt a) durch das Aufbringen eines Schlickers mit einer anschließenden Wärmebehandlung erfolgt.

12. Verfahren nach einem der Ansprüche 1 bis 6, **dadurch gekennzeichnet, dass** das Aufbringen der Schicht (16) gemäß Verfahrensschritt a) galvanisch erfolgt.

13. Verwendung eines Verfahrens gemäß einem der Ansprüche 1 bis 12 zur Herstellung und Reparatur von Triebwerksbauteilen aus Nickel-, Kobalt-, Eisen- oder Titanbasislegierungen, insbesondere zur Herstellung und Reparatur von Schaufelprofilen.

14. Verwendung eines Verfahrens gemäß einem der Ansprüche 1 bis 12 zur Herstellung und Reparatur von Triebwerksbauteilen, insbesondere zur Herstellung und Reparatur von integralen Rotor-Konstruktionen, insbesondere einer Blisk ("Bladed Disk") oder eines Blings ("Bladed Ring").

## Claims

1. Method for machining and/or repairing a metal workpiece (10) comprising at least one already finished or almost finished workpiece sub-surface (12) and at least one machining surface (14) that is to be further machined by means of an electrochemical machining method and is adjacent to the at least one already finished or almost finished workpiece surface (12), the method comprising the following steps:
a) applying a metal or electrically conductive layer (16) to at least one region of the at least one already finished or almost finished workpiece sub-surface (12), which region is adjacent to the machining surface (14), the layer (16) containing a metal or a metal alloy or another electrically conductive material and having a similar or the same electrochemical removal behavior or targeted different removal behavior as the metal workpiece (10); and
b) electrochemically or precisely electrochemically machining the machining surface (14) and the layer (16), **characterized in that** the layer (16) is completely or almost completely removed.

2. Method according to claim 1, **characterized in that** the electrochemical machining method is a pulsed or non-pulsed electrochemical countersinking method.

3. Method according to claim 1, **characterized in that** the electrochemical machining method is an electrochemical drilling method.

4. Method according to any of the preceding claims, **characterized in that** the layer (16) consists of a nickel, cobalt, iron or titanium base alloy.

5. Method according to any of the preceding claims, **characterized in that** the workpiece (10) consists of a nickel, cobalt, iron or titanium base alloy.

6. Method according to any of the preceding claims, **characterized in that** the layer (16) has a thickness of between 1 µm and 2 mm.

7. Method according to any of the preceding claims, **characterized in that** the application of the layer (16) according to method step a) takes place by means of coating.

8. Method according to any of claims 1 to 6, **characterized in that** the application of the layer (16) according to method step a) takes place by means of a thermal spraying method.

9. Method according to claim 8, **characterized in that** the thermal spraying method is an electric arc spraying method, a flame spraying method, an atmospheric plasma spraying method or a high-speed flame spraying method or a plasma spraying method in the shielding gas/vacuum.

10. Method according to any of claims 1 to 6, **characterized in that** the application of the layer (16) according to method step a) takes place by means of a cold gas spraying method.

11. Method according to any of claims 1 to 6, **characterized in that** the application of the layer (16) according to method step a) takes place by means of applying a slurry along with a subsequent heat treatment.

12. Method according to any of claims 1 to 6, **characterized in that** the application of the layer (16) according to method step a) takes place by means of electroplating.

13. Use of a method according to any of claims 1 to 12 for manufacturing and repairing engine components made of nickel, cobalt, iron or titanium base alloys, in particular for manufacturing and repairing blade profiles.

14. Use of a method according to any of claims 1 to 12 for manufacturing and repairing engine components, in particular for manufacturing and repairing integral rotor constructions, in particular a blisk ("bladed disk") or a bling ("bladed ring").

## Revendications

1. Procédé pour l'usinage et/ou la réparation d'une pièce à usiner métallique (10) comprenant au moins une surface partielle de pièce à usiner (12) déjà usinée ou presque usinée et au moins une surface d'usinage (14), adjacente à l'au moins une surface partielle de pièce à usiner (12) déjà usinée ou presque usinée, devant continuer à être usinée au moyen d'un procédé d'usinage électrochimique, le procédé comprenant les étapes suivantes :
a) l'application d'une couche métallique ou électriquement conductrice (16) sur au moins une zone adjacente à la surface d'usinage (14) de l'au moins une surface partielle de pièce à usiner (12) déjà usinée ou presque usinée, la couche (16) contenant un métal ou un alliage métallique ou un autre matériau électriquement conducteur qui présente un comportement d'érosion similaire ou identique ou un comportement d'érosion spécifiquement différent à celui de la pièce à usiner métallique (10) ; et
b) usinage électrochimique ou électrochimique précis de la surface d'usinage (14) et de la couche (16) **caractérisé en ce que** la couche (16) est complètement ou presque complètement éliminée.

2. Procédé selon la revendication 1, **caractérisé en ce que** le procédé d'usinage électrochimique est une procédé de fraisage électrochimique pulsé ou non-pulsé.

3. Procédé selon la revendication 1, **caractérisé en ce que** le procédé d'usinage électrochimique est un procédé de forage électrochimique.

4. Procédé selon l'une quelconque des revendications précédentes, **caractérisé en ce que** la couche (16) se compose d'un alliage à base de nickel, de cobalt, de fer ou de titane.

5. Procédé selon l'une quelconque des revendications précédentes, **caractérisé en ce que** la pièce à usiner (10) se compose d'un alliage à base de nickel, de cobalt, de fer ou de titane.

6. Procédé selon l'une quelconque des revendications précédentes, **caractérisé en ce que** la couche (16) a une épaisseur de 1 µm à 2 mm.

7. Procédé selon l'une quelconque des revendications précédentes, **caractérisé en ce que** l'application de la couche (16) conformément à l'étape de procédé a) s'effectue par peinture.

8. Procédé selon l'une quelconque des revendications 1 à 6, **caractérisé en ce que** l'application de la couche (16) conformément à l'étape de procédé a) s'effectue par un procédé de pulvérisation thermique.

9. Procédé selon la revendication 8, **caractérisé en ce que** le procédé de pulvérisation thermique est un procédé de pulvérisation à l'arc électrique, un procédé de pulvérisation à la flamme, un procédé de pulvérisation atmosphérique au plasma ou un procédé de pulvérisation à la flamme grande vitesse ou un procédé de pulvérisation au plasma dans un gaz de protection/vide.

10. Procédé selon l'une quelconque des revendications 1 à 6, **caractérisé en ce que** l'application de la couche (16) conformément à l'étape de procédé a) s'effectue par un procédé de pulvérisation à gaz froid.

11. Procédé selon l'une quelconque des revendications 1 à 6, **caractérisé en ce que** l'application de la couche (16) conformément à l'étape de procédé a) s'effectue par l'application d'une barbotine avec un traitement thermique ultérieur.

12. Procédé selon l'une quelconque des revendications 1 à 6, **caractérisé en ce que** l'application de la couche (16) conformément à l'étape de procédé a) s'effectue galvaniquement.

13. Utilisation d'un procédé selon l'une quelconque des revendications 1 à 12 pour la fabrication et la réparation d'éléments de moteur en alliage à base de nickel, de cobalt, de fer ou de titane, en particulier pour la fabrication et la réparation de profilés à aubes.

14. Utilisation d'un procédé selon l'une quelconque des revendications 1 à 12 pour la fabrication et la réparation d'éléments de moteur, en particulier pour la fabrication et réparation de constructions de rotor intégrées, en particulier d'un disque aubagé ou d'un anneau aubagé.
